# EUROPEAN PATENT APPLICATION

(11) **EP 2 958 268 A1**
(43) Date of publication of application: **23.12.2015**
(21) Application number: 14305937.6
(22) Date of filing: 18.06.2014
(51) Int. Cl.: H04L 12/24

(54) **Method for presenting relevant resources to end-user communication equipment using network caching**

(71) Applicant: ALCATEL LUCENT, 92100 Boulogne-Billancourt (FR)
(72) Inventor: Le Pallec, Michel, 91620 NOZAY (FR); Vigoureux, Martin, 91620 NOZAY (FR)
(74) Representative: Hirsch & Associés

(57) **Abstract**

A method is provided for presenting resources owned by resource providers to end users over a network to which items of end-user communication equipment able to use said resources are connected. It more particularly concerns the selection of resources that are relevant to the end user while satisfying both end-user expectations as regards the resource/service offered as well as resource/service distribution constraints related to the network. One or more filtering operations to remove resource descriptions not able to satisfy network requirements and filtering operation typically based on requirements as determined by users is applied on the resources database. This methodology makes it possible to deliver a light and relevant resources database close to end users for subsequent light advertisement to end users.

## Description

### FIELD OF THE INVENTION

The present invention relates to networks comprising nodes to which resources, owned by resource providers and items of end-user communication equipment able to use said resources are connected. It more particularly concerns the selection of resources by end users.

### BACKCROUND OF THE INVENTION

The number of resources that are being deployed in networks, in association with end users or enterprises or items of network equipment serving end users, is increasing at a phenomenal rate. This is notably the case of resources-capabilities/services offered by computing, storage, connected objects (such as Internet of Things (or IoT)) devices and content for instance provided by VOD servers. The result is that it is becoming more and more difficult for an end user to select the source(s) or provider(s) of resources that is (are) well adapted to his/its (service) needs or expectations while taking into account the capability of the network and communication equipment employed, notably when many resources and end users are separated by a Wide Area Network (or WAN).

The term "resource" as used herein designates capabilities or service elements offered by any type of virtual or physical element (hardware and/or software) that an entity/owner can put at another entity's/client's disposal. The term resource also covers the source where services and capabilities are available. A resource may be a computing means, a processing means, a communication means, a storage means, a connected object (such as an Internet of Things (or IoT) device), or content such as a VOD (video on demand) content, or other services, these simply being examples.

The term 'Resource description' used in this document simply refer to the description of resources.

Items of end-user communication equipment as referred to herein mean any device/object connected to the network. This device/objet may, among other things, be a smartphone, an actuator, a computer, a display screen, without this list being limiting. Conceptually, an item of end-user communication equipment represents the final element (or the 'client') of a service chain.

Currently, two basic models regarding the physical location of resource descriptions exist: these may be centralized in remote and huge datacenters or, alternatively, fully distributed especially near end users (for instance in network edge routers (such as BNG ("Border Network Gateway") or RNC ("Radio Network Controller") or network access points).

In the case where resources are distributed, there is currently no known solution for providing end users with useful descriptions of available resources and of their sources and providers, in order to help them make a selection. In the case where resource descriptions are centralized in a big database, useful descriptions of available resources may be available, but this fact gives rise to new issues. Firstly, with the steady increase in the sheer volume of resources, an issue of scalability arises when this is done at a central point because signaling and selection complexity (and related selection time) are constantly on the increase for end users. In this model, a complete collection of descriptions of all resources is held in a central database. This database is typically specific to one ISP (Internet Service Provider). A large amount of information is thus available at a central point, which generates a considerable signaling overhead and makes the selection of the most relevant ISP/resource for a given end user particularly complex (what is known as Big Data Analytics with its associated computing power may become essential).

One solution might be to place full replicas of resource descriptions (i.e. proxies) close to end users, but this can be seen to be as suboptimal since a lot of information must be carried close to end users whereas only a fraction of this information will actually be presented to and used by these end users. An additional disadvantage of this approach is that when a service-oriented approach is considered, an end-user wishing to use a particular resource might need to be connected through an arbitrary ISP through a service layer when requesting a given service whereas this end-user might be already attached to another ISP (or mobile operator). Upon selection of the most relevant ISP/resource, the end user may then have to disconnect from his current ISP and connect to another ISP providing services that match the end user's requests/expectations.

At this point, it can be mentioned that two models can be used for presenting resources/ ISPs to end users. The first of these is a user request/selection/response model, i.e. a connected approach. This approach is typically a service-oriented approach in which the end user is typically connected to a service layer for requesting given requesting services. An item of end-user communication equipment sends a request to a centralized database where resources are collected. User requests may be parameterized and then the entire database is filtered on the basis of the requested parameters. Then, a resource selection algorithm is applied on the entire/full database. Finally, the best resource/ISP solution is sent back to the end-user.

In the second model, resources/ISPs are only advertised to end users. The latter then select the best solution according to their needs. However, without any prior filtering step, resource advertisement raises a strong scalability issue. Nevertheless, this model does allow for offline resource advertisement in which resources are seamlessly advertised through available wireless signaling, without being connected, meaning with no prior attachment between ISP/mobile operators and end users. While considering the amount of information to be advertised (an extreme scenario would the advertisement of all of an ISP's resources), this approach is clearly inappropriate, even when we consider the extension of the wireless signaling resource dedicated to the advertisement of huge resources/capabilities. A prior filtering step is highly recommendable for limiting the amount of information advertised.

### SUMMARY OF THE INVENTION

An aim of this invention is to overcome the inherent problems discussed above, and notably to allow a user at an item of end-user communication equipment to more easily discover and select resources which are not only relevant, but which are particularly relevant and able to meet his/its needs while at the same time taking into account the network impact, without any prior connection to the resources or providers of these resources. More generally, the invention aims to provide a solution to the scalability issue encountered at aggregation/advertisement points, especially advertisement points close to targeted end-users. Thanks to the invention, fewer, but more relevant resource descriptions are collected close to end users and fewer resources are advertised to end users. As a result, end users are seamlessly able to select relevant resources and resource providers that can satisfy their needs or expectations. The invention is particularly useful in the case where a wireless base station (LTE, 3G and above...) or Wifi hotspot represents the offline advertisement point, close to end users. Indeed, in the non-connected approach, resource advertisement is only performed via wireless signaling (e.g. a Wifi beacon). In such a case, the advertisement of resource descriptions is limited by the size of the dedicated wireless channels. The invention allows this limitation to be overcome by considerably reducing the amount of information to be advertised through wireless signaling.

The idea behind the invention consists in caching and in advertising only resources/ capabilities/ services that are relevant to the end user while satisfying both end-user expectations as regards the resource/service offered as well as resource/service distribution constraints related to the network. Filtering of resource descriptions is performed taking into account resource cost and network reachability requirements, (in terms of bandwidth, delay, loss, cost...) after which only relevant advertised resources/services are cached. The result is a smart final selection of ISP (or mobile operator or end-user) /resources. As such, resources (as defined herein) are initially described with their inherent cost together with their network requirements. A resources database is built. One or more filtering operations to remove resource descriptions not able to satisfy network requirements and another typically based on requirements as determined by users is applied on a resources database. This methodology makes it possible to deliver a light and relevant resources database close to end users for subsequent light advertisement to end users.

In a development of the invention, user requests are collected in a database and frequency of user requests is used as an indication of service/resource request and/or acceptance probability, and this is also advertised throughout the internet using a dedicated user database. User database request and/or acceptance probability for a given service/ resource may be derived from statistical information obtained on the basis of resource requests made by end users, together with, for example, user capabilities for using resources/services, user preferences/profile, user location (spatial constraints) or user availability (time constraints) and/or acceptable cost for a given resource/ service.

To this effect the invention provides a method for presenting resources, accessible via a network comprising nodes, to end-user communication equipment so that end users are able to select relevant resources and related resource providers thereof according to their needs or expectations, comprising:
i) collecting descriptions of resources currently offered to end users, said descriptions including attributes relating to network requirements for interaction with said resources, and entering said descriptions into a resources database located at at least one node of said network, including the step of aggregating said descriptions where possible,
ii) collecting at a local level descriptions on a per-user basis of requests made by end users for interaction with resources, and aggregating said request descriptions and entering same into a user database located at at least one node of said network, said request descriptions including attributes usable for predicting acceptance probabilities for resources, said descriptions including attributes relating to network requirements
iii) collecting traffic engineering parameters relating to a relevant segment of said network and constituting potential network constraints and building therefrom at least one network database covering said segment of the network;
iv) transmitting said resources database through said network in a direction towards end users and optionally said user database through the network in a direction towards resources;
v) at a node of said network where a network database and a resources database are present but not a user database, applying a said network database as a filtering function to a said resources database resulting in a reduced resources database for transmission to a next network node, said network attributes associated to resources being updated with regard to the network filtering step
vi) at a node of said network where a network database and a user database are present but not a resources database, optionally applying said network database as a filtering function to a said user database resulting in a reduced user database for transmission to a next network node, said network attributes associated to user requests being updated with regard to the network filtering step
vii) at a node of said network where simultaneously a network database, a user database and a resources database are present, applying said network database as a filtering function to a said resources database and/or to said user database and then, at said node, correlating entries in said resources database with entries in said user database in order to generate a user-request-specific database carrying descriptions of resources having a probability of request and/or acceptance by end users exceeding a certain threshold and the delivery of which is compatible with network constraints,
viii) caching and storing said user-request-specific database in the form of one or more auxiliary database(s) accessible to at least one node that is close to end-user communication equipment.

Thus, thanks to the invention, only descriptions of resources that appear to be relevant (or of real interest) to end users are cached in auxiliary database(s) close to the items of communication equipment of end users, which notably eases and speeds up the search for a resource. Additionally, filtering using a network and resources and user databases has the considerable advantage of network constraints only being applied to descriptions of announced resources (and of requested resources) but not on the data generated by those resources.

An Internet Service Provider (ISP) may have full control of a network or only control the edge of the network in which case, in an embodiment, when an Internet Service Provider only controls the edge of the network at the resource and user edges but is nevertheless able to build an end-to-end network database based on end-to-end measurements, the network filtering and/or said matching and correlating is carried out at each node level defining an edge router of said network to which a resource, or source of a resource is connected and/or at each node defining an edge router of the network to which an item of end-user communication equipment is connected, whereby elements of the resources database and/or user database are updated and reduced taking into account network requirements for a given network segment, which in this case is preferably end-to-end.

In the above case, network filtering can be applied to a resources database and/or user database at output edge router (i.e. closest to end users) level, at input edge router (i.e. closest to resources) level, directly or retroactively, or at both points.

When an Internet Service Provider does have full control of a network segment, the method can include collecting local network states or traffic engineering parameters at nodes of the network which are stored locally, and building therefrom a local network database specific to that node and arranging for network databases to be fully distributed at each node of said network, and network filtering is then performed at each intermediate node between resources and users along the resources-to-end users network path and both user and resources databases are cached locally before being transmitted to the next node.

The one or more auxiliary database(s) created by the method is/are preferably updated from time to time by repeating steps of the method. All or some of the above network filtering and matching/correlation steps to produce an auxiliary database could, simply by way of example, be performed periodically, either on a regular basis, or when there is a new event resulting from a new resource, or a new user request/ expectation arising, or when a number of changes in said resources and/or user databases exceed a certain threshold.

When a network database is applied as a filtering function to a user database resulting in a reduced user database, the result preferably includes lowering user acceptance probability in view of network constraints.

The traffic engineering parameters referred to which constitute potential network constraints in a relevant segment of the network can include at least one of: quality of service (QoS), bandwidth, network element transit delay and adjacent link transmission delay, and for a given destination available bandwidth, latency and monetary cost.

These network constraints can be expressed in a deterministic manner, or alternatively in a probabilistic manner. In the latter case, as a result of network filtering, a probability that network requirements will be met can be attached to elements in resources and user databases, after which a probability threshold is applied to each element and when probability of meeting network requirements is below this threshold value, the element can be removed from the respective database.

Network filtering of a resources database can include removing those resources which are not able to be correctly used in view of a network state.

Regarding user databases, at least one user database is preferably built and aggregated at edge router or BNG (Border Network Gateway) level serving end users.

The attributes in a user database usable for predicting acceptance probabilities for resources attributes can represent at least one of:
- acceptable monetary cost of providing said resources,
- network requirements for acceptance of said resources and server requirements to ensure compatibility with an end user's possibilities,
   wherein the above probabilities of resources being requested and being accepted by end users take account of at least one of: statistical information related to number of requests from end users, possibilities of users to use said resources, user preferences, user profile, user spatial location and user availability in terms of time, and acceptable monetary cost for a given resource.

Resources are described with their attributes. These can comprise at least one of:
- network requirements enabling said remote resources to be offered to end-users, and
- requirements client end-user communication equipment must meet to enable them to interact with said resources.

Each of the above determined resource acceptance probabilities and each network filtered and/or correlated and matched description can be transmitted within the network by means either of advertisement messages or of application messages. These messages can be transmitted either in a node-by-node mode or in an end-to-end mode.

Although the invention applies to resources owned by, and focuses on resources owned by ISPs, the invention may apply to the case where resources are owned by (and attached to) end users (meaning that an item of end-user communication equipment behaves as a service/resource provider). More generally, the invention considers the case where a given entity provides connectivity services (ISP, mobile operator) as well as new services related to computing, IoT (Internet of things), storage and content. When resources are owned by end users themselves and end users may be mobile, the method includes the step of making implicit entries in a user database with an acceptance probability close to 1, allowing an end users to have access to their own resources if network filtering on the path to the user's location renders this feasible. This may be advantageous considering that end users may not be able to handle the increasing complexity and the number of owned digital devices and the fact of presenting only relevant resources and especially resources for which network requirements are met constitutes an advantage for end users.

Again, where resources are owned by end users themselves, a resources database according to the invention can aggregate descriptions of home network or individual resources, services or capabilities owned by end users themselves can be collected and aggregated at an edge router of a network before it is advertised to other communities or private groups through the internet.

The invention also provides a computer program product comprising a set of instructions arranged, when it is executed by processing means, for performing the above method in order to present resources, services or capabilities, accessible via a network comprising nodes, to users of end-user communication equipment.

Other features and advantages of the invention will become apparent on reading the detailed specifications hereafter in conjunction with the appended drawings.

### BRIEF DESCRIPTION OF THE DRAWINGS

FIG. 1 schematically and functionally illustrates an example of a network comprising a backhaul in which the method according to the invention may be implemented.
FIG. 2 illustrates the general principles of the invention showing matching/correlation between databases issued by resource or source owners and end users while taking account of network constraints

### DETAILED DESCRIPTION OF PREFERRED EMBODIMENTS

The invention provides a method for presenting resources, accessible via a network 1 comprising nodes 2ₖ, to end-user communication equipment 3ⱼ so that end users are able to select relevant providers thereof according to their need or expectations.

The invention will be described for the case of a single ISP, as the invention mainly focuses on an intra-ISP case. Nevertheless, from a general point of view, the invention applies for a given ISP and for multiple ISPs. In terms of resources, ISPs are considered to be fully isolated one from each other. Only users attached to multiple ISPs have the possibility of seeing all the resources belonging to all these ISPs. In the case of ISP federation, an ISP federation could be considered as a single ISP.

Embodiments will be discussed for the situations where the ISP fully controls the resource/end user path, or does not fully control the resource/end user path.

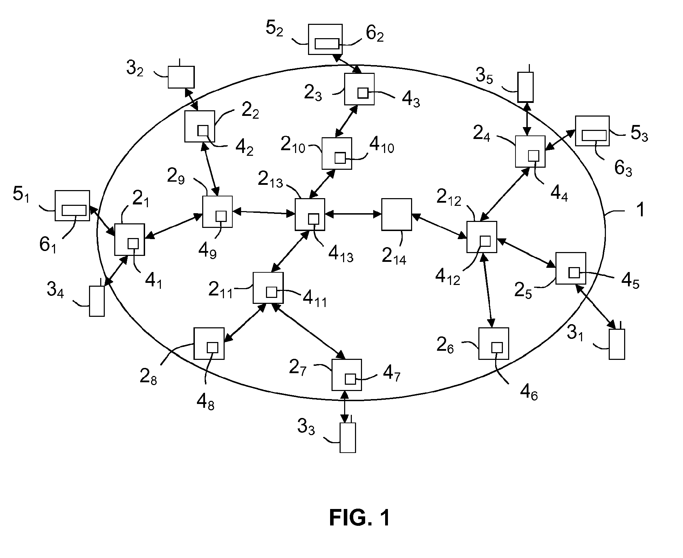

A non-limiting example of a network 1, in which the invention may be implemented, is illustrated in FIG. 1 In this example, the network 1 comprises a backhaul network connected to a core network (not illustrated) and comprising nodes 2ₖ defining routers. In this non-limiting example the backhaul network comprises fourteen nodes 2₁ to 2₁₄ (k = 1 to 14). But the number of backhaul nodes 2ₖ may be greater or smaller than fourteen, as soon as it is at least equal to two.

In the non-limiting example the (backhaul) nodes 2₁ to 2₈ define respectively edge routers to which items of communication equipment 3ⱼ and 5ₙ may be connected, the (backhaul) nodes 2₉ to 2₁₂ define respectively first intermediate routers that are connected respectively to at least one edge router, the (backhaul) node 2₁₃ defines a second intermediate router that is connected to at least one first intermediate router and to a third intermediate router 2₁₄, and the (backhaul) node 2₁₄ defines this third intermediate router that is connected to at least one second intermediate router 2₁₃ and to another intermediate router which may be a first, second or third one (here it is the first one 2₁₂).

Moreover, in the following description it will be considered that an item of communication equipment referenced 3ⱼ designates an item of end-user communication equipment that may be a consumer of resources, while an item of communication equipment referenced 5ₙ belongs to an enterprise that comprises at least one source 6ₙ of resources. For instance, items of communication equipment referenced 3ⱼ may be smartphones, tablets, laptops or personal computers, while communication equipment referenced 5ₙ may be servers or computers. Also for instance, an enterprise may be considered as an Internet Service Provider (ISP). It is important to note that a source 6ₙ may be a resources database or an item of electronic equipment producing or delivering resources. It is also important to note that an item of end-user communication equipment 3ⱼ may be also considered as a resource of a specific provider. In this last case it may comprise or be coupled to at least one resources database and/or may comprise or be coupled to an item of electronic equipment producing or delivering resources.
At least one step of the method, and preferably more, may be performed at the time of initialization or when a change, for instance concerning an item of communication equipment's requirement for receiving resources or an end-user's resource acceptance cost or a resource cost or else a resource distribution constraint related to at least a part of a network, occurs.

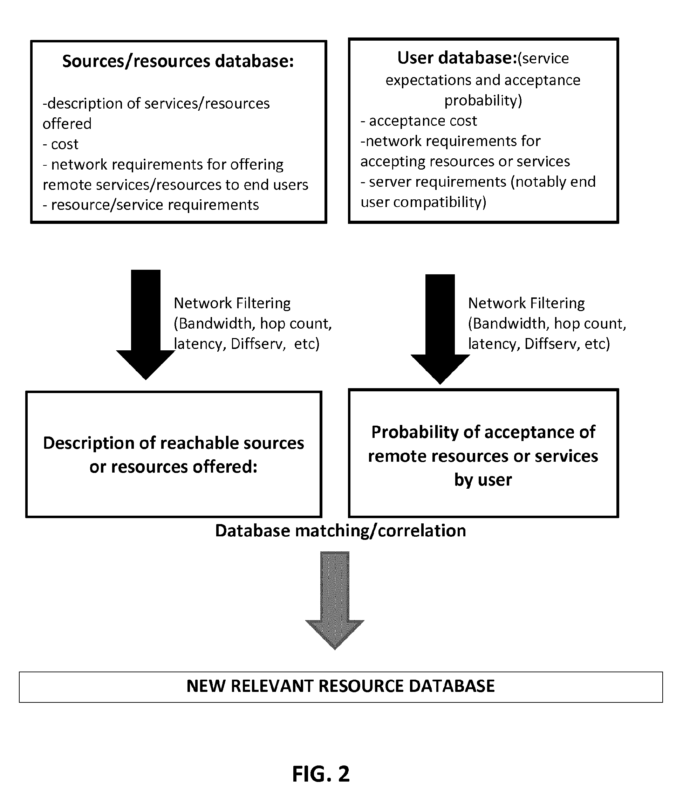

FIG. 2 illustrates the general principles of the invention showing matching/correlation between a source/resources database carrying descriptions of resources with their attributes and an end user database in which data relevant to resource expectations and acceptance on the part of end users is aggregated, while taking account of network constraints. These are discussed in more detail below with particular reference to FIG. 1.

The method comprises initially collecting descriptions of resources currently offered to end users including attributes relating to network requirements for interaction with these resources, and entering these descriptions into what we shall call a resources database. Collection and building the database may possibly not be performed at the same location. Resource databases are instantiated at the resource level. When resource descriptions are being initially collected, each resource description is logically defined by resource owners as someone owning an item of communication equipment 5ₙ proposing resources or by a software program under control of this latter. As an enabler, each resource description may be generated by the resource itself, advertising of such resource descriptions is under the control of the resource owner or a related administrative entity representing the resource owner. All the descriptions of the resources proposed by an item of communication equipment 5ₙ may be stored into a resources database or store belonging to the latter (5ₙ) or which is connected to the latter (5ₙ). Resources databases gather (at the resource level) resource descriptions that have been collected, with their related network requirements such as distribution cost and technical requirement(s) (latency, bandwidth, etc.). Descriptions are aggregated where possible considering that resources may be public, semi-public or private and as a consequence, aggregation of resources may be less straightforward. Accordingly, each resource is assumed to be unique with its related description in the resource database.
Resource descriptions with their attributes in a resource database might read: ISP@source 1, [resources], req = 1 Mbit/s 10 ms
...
ISP@source n, [resources], req = 1 Mbit/s 50 ms.
Aggregation can be considered as a first reduction of the database.

At the same time, one or more further databases, referred to as user databases are built by collecting at a local level descriptions on a per-user basis of requests made by end users for interaction with resources, and aggregating, where possible, these requests into a user database located at at least one node of the network. This particularly involves, on a per resource basis, averaging user requests as a measure of user expectations (probability of acceptance by users) with regard to the numbers of users.
User databases are instantiated at the user level (item of end-user communication equipment). A user database locally gathers descriptions of end-user expectations expressed in terms of probability of resource acceptance with related network requirements such as distribution cost and technical requirements (latency, bandwidth, etc.)

User resource acceptance probability may concern one or several end users, depending on the number of end users for whom the corresponding resource description database replicas are determined. For instance, user resource acceptance probability may be determined from statistical information related to end-user requests for resources and/or end-user capabilities for using resources and/or end-user preferences and/or end-user profile and/or end-user (communication equipment) location and/or end-user availability (via the end user's communication equipment 3ⱼ) and/or an acceptable cost for a given resource. When a user database is being built to include probability of acceptance for given resources, the size of the user database can be reduced before any network filtering step by taking account of a probability threshold, meaning that for non-explicit requests (for which probability P=1 - this case is discussed in more detail elsewhere herein), then, if probabilities of acceptance are below a given threshold the corresponding entries are removed from the user database resulting in a reduced database for subjection to network filtering. Obviously a similar probability threshold can be applied on the user database after it has been network filtered.

Preferably a resource having a null acceptance probability is not stored in an auxiliary database 4ₖ.

A user database, where user request data useful in determining user resource acceptance probabilities is stored is somewhat static, because information that is used to determine these does not greatly change frequently. Nevertheless a user database may also support a dynamic and interactive mode, as may a resource database. Any new description of resources or user expectation is registered in the relevant database.

The method makes use of traffic engineering data for each particular network segment to reduce the size of resources databases by filtering out descriptions of resources which are not reachable in view of network constraints in a resource-to-user path. As we have supposed here that resources and end users are within the same ISP, then descriptions in a resources database and optionally a user database can first be filtered by applying a filtering function obtained from a network database covering a particular segment of the network before proceeding to create a lighter and more relevant auxiliary database for presentation to users.

Regarding this network filtering performed using traffic engineering data representing a network database useful in determining probability of resource-to-end-user reachability, by a network requirement we mean an economic or technical characteristic that the part of the network 1 that will be used for transmitting a resource from its source to the requesting end-user communication equipment 3ⱼ must offer. For instance, it may a (maximum) distribution cost, a (minimum) bandwidth, or a (maximum) end-to-end latency or else a maximum packet loss ratio. An example of an entry in a network database (for the case a where a single ISP is able to capture and exchange reachability / end-to-end information (QoS related , bandwidth, delay, etc) - within a dedicated network database between edge routers representing the delineation points of its domain) might read:
@ destination (or network prefix)
Through AS1, AS2, AS3
Available bandwidth= 10 Mbit/s, latency = 50 ms, cost = $3/Mbit/s
   (here AS stands for autonomous system)
As seen, network parameters are related to the communication direction, meaning from resources to end users (the opposite communication direction would have different parameters);
By convention, the reference network filtering point is:
- the egress port (in the resources to end users communication direction) for the resources database
- the ingress port in the opposite communication direction for the user database

Network requirements for determining resource/service reacheability can be explicit or implicit. As an illustration of the implicit scenario, an entry in a resources database could be the description of a connected camera for a real time video experience in which case network requirements could be automatically generated and translated as requirements at application level for a bandwidth of about 10 Mbit/s and end-to-end latency below 100ms. Filtering performed using a network database would check whether or not this criterion can be satisfied, and if not, the entry for this camera would be removed from the refreshed resources database or if it were to be left, it would carry a warning that the resource might not perform satisfactorily.

Acceptance cost is the maximum cost that an end-user (or (an item of end-user communication equipment) is ready to pay to use a resource with its communication equipment 3ⱼ.

A requirement that enables a resource to be offered to an end user is mainly a technical characteristic that the part of the network 1 to which an item of end-user communication equipment 3ⱼ is connected must offer and which will therefore be used for transmitting a resource from its source to this end-user communication equipment 3ⱼ. For instance, it may be a bandwidth or an end-to-end latency or else a packet loss ratio for a given network segment.

Parameters included in the network data base may either be deterministic or probabilistic. A delay could for instance be either an instantaneous delay or a probability of being below a given delay.

According to one step of the invention, descriptions in user and/or resources databases are subjected to network filtering within a network segment between resources and end users (or items of end-user communication equipment). Applying the network transfer function to each element of the resources or user database, leads to descriptions of resources or, respectively, requirements within the resource and the user database being updated and reduced. As said, parameters included in the network database may either be deterministic or probabilistic. When a parameter is probabilistic, then as a result of a first network filtering step, the resources and user databases are now a set of elements associated with a probability that network requirements will be met for those elements. Following this, in a second step, a probability threshold is applied to effectively reduce database size. For instance if we consider a threshold probability of P= 0.1, then when probability of meeting network requirements is below this value, the element is removed from the related database.

Databases resulting from network filtering have a local meaning and aim to represent resources and users as if they were present at the place where each filtered database is stored. From a conceptual approach, user and resources database represent a set of virtual or proxyfied users or resources.

As a result of network filtering, descriptions of network requirements in both resource and user databases have been updated taking into account network constraints respectively along the path from the resource to the place the filtered database is stored, and along the path from the place the filtered database is stored to the end-user (item of end-user communication equipment), those descriptions of resources or user expectations which network requirements are unable to satisfy in view of network constraints having been removed resulting in a reduction of the amount of data in these local resource and/or user databases, the lighter database or databases being temporarily stored at the intermediate node 2ₖ of the network 1.

The invention particularly considers two separate cases: one where the ISP (Internet Service Provider) does not have full control of the network (which is simply a black box for the ISP) but only controls the edge of the network at the resource and user edges but is nevertheless able to build an end-to-end network database, which can be centralized, based on end-to-end measurements. More particularly, this suggests the use of a network monitoring plane wherein a single ISP is able to capture and exchange reachability / end-to-end information (QoS, bandwidth, delay, etc related) within a dedicated network database, between edge routers representing the delineation points of the ISP's domain. Accordingly, when resources are being presented towards remote end users, a resources database can be first network filtered using this dedicated network database at the output edge router, at the input edge router level directly or retroactively, or at both points, taking network reacheability as a filtering parameters.

Before presenting resource descriptions to end-user equipment, a network-filtered resources database is advantageously further reduced in size and made more specific to user expectations by tailoring it on the basis of data that has been collected in a user database. This requires a user database and a resources database, both of which may already have undergone one or more network filtering operations, to be present at a node. Thus, when, at an intermediate node 2ₖ of the network 1, a resource and a user database, one or both of which may possibly have been reduced in volume by application of the network filtering discussed above, are simultaneously present, then during a second step, a filtered resources database is tailored to user expectations by determining, from among these filtered descriptions, those resource descriptions that satisfy a given resource acceptance probability threshold at this at least one node 2ₖ of the network 1. Then those resource descriptions which meet the resource acceptance probability threshold requirement are stored in auxiliary database(s) 4ₖ accessible to at least one node 2ₖ. Resource descriptions which do not satisfy this resource acceptance probability threshold are not presented to end-user communication equipment. All the above network filtering and matching/correlation steps to produce a reduced database could, simply by way of example, be performed periodically, or on a regular basis, or when there is a new event (a new resource, a new user request/ expectation).

Thus, thanks to the invention, only descriptions of resources that appear to be relevant (or of real interest) to end-user(s) are cached in auxiliary database(s) 4ₖ close to the communication equipment(s) 3ⱼ of this or these end user(s), which notably eases and speeds up the search for a resource.

Regarding transmission of the resources and user databases, updates or the totality of user databases carrying information on resource acceptance probability and updates or the totality of resource databases carrying optionally filtered resource descriptions are transmitted (or advertised) in the network 1 towards the node 2ₖ that will use these for matching and correlation purposes by means either of advertisement messages (i.e. at network level (layer 3 of the OSI (Open Systems Interconnection) model)) - for instance LSA ("Link State Advertisement") messages) or of application messages (i.e. at application level (layer 7 of the OSI-Open Systems Interconnection model) - for instance through the extension of DLNA / UPnP or any equivalent protocol). The choice of an IP (Internet Protocol) (layer 3) or application (layer 7) based approach depends on the size of the databases to be transmitted over network 1, those databases (or memories) that are actually storing the resource descriptions or the user resource acceptance probabilities or else any information needed for determining user resource acceptance probabilities.

A distribution at application level (layer 7) is currently preferred for large network environments (i.e. with many resources and many end users). A distribution at network level (layer 3) might be preferred for limited network environments (with few resources and end users).

Whatever their type, the above mentioned messages may be transmitted either in a node-by-node mode or in an end-to-end mode.

Resource descriptions which have been reduced in number as a result of at least one network filtering operation and then further reduced as a result of matching and correlation with user requests and acceptance probabilities at a node 2ₖ may be stored in a much reduced auxiliary database either attached to this node 2ₖ or which is accessible to this node 2ₖ. Such a greatly reduced (final) resources database conceptually represents a hit probability regarding end-user requests for relevant resources delivered with a good quality of experience.
When relevant user-request-specific resources databases have been obtained, intermediate user databases might be removed. For resources never requested, related entries in an intermediate resources database can be removed after a given configuration time.Depending on whether the ISP has or has not full control of a network, matching/correlation may be carried out in different types of node 2ₖ. For instance, and as illustrated in the non-limiting example illustrated in FIG. 1, in the case where the network 1 comprises nodes 2₉-2₁₂ defining first intermediate routers coupled to at least two nodes 2₁-2₈ defining edge routers, each connected to at least one resource source 5ₙ, the matching/correlation may be carried out in at least one intermediate router 2₁-2₈. In this case, one aggregates into each first intermediate router 2₁-2₈ network filtered descriptions of the resources or sources 5ₙ that are coupled to it (via edge routers 2₁-2₈), in order to get aggregated filtered descriptions. Then one determines from amongst the filtered descriptions that have been aggregated at a first intermediate router 2₁-2₈, those which match or exceed the determined resource acceptance probability thresholds obtained from the optionally network-filtered user database covering those items of end-user communication equipment 3ⱼ that are accessible via this first intermediate router 2₁-2₈. Then, replicas of these resource descriptions, the aggregated filtered descriptions of which match or exceed the determined resource acceptance probability thresholds, are stored in an auxiliary database 4ₖ accessible to this first intermediate router 2₁-2₈. The same process is carried out in each concerned first intermediate router 2₁-2₈.

Large resource providers, such as ISPs, may also have full control of the network 1 between the resource sources and the connected items of end-user communication equipment 3ⱼ between resources/services and end users while connected (thus multiple independent networks). This particularly prevents the use of a centralized database for retrieving network reachability information.

In this case, according to the invention, network filtering of a resources and/or user database is performed in a fully distributed way along the resources-to-end-users network path. Resources and user database matching/correlation may also performed in a fully distributed way along the resources-to-end users network path (and therefore in edge routers and/or in intermediate routers. This can be viewed as a resources database getting "transmitted" towards end users and cached hop-by-hop (or node by node) in auxiliary databases 4ₖ while being made lighter and made more specific to end user requests and expectations while ensuring reachability of the resources presented achieved by network filtering taking account of local knowledge of local network states or traffic engineering parameters (such as QoS, bandwidth, network element transit delay and adjacent link transmission delay, for instance). Network database filtering is followed by database matching/correlation, at each hop (or router) where a resources database and user database are simultaneously present. As a result, auxiliary databases 4ₖ become less and less populated as they come closer and closer to end users, but at the same time the probability of finding a description of a resource matching a request made by an end user at an item of end-user communication equipment or the end-user's expectations increases while becoming closer and closer to resources/services descriptions.

The invention can also be considered in terms of a computer program product comprising a set of instructions arranged, when it is executed by processing means (and notably those comprised by the backhaul nodes 2ₖ), for performing at least part of the method described above for presenting resources, accessible via the network 1, to an item of end-user communication equipment 3ⱼ.

If an end user is a customer of multiple ISPs (and connectable to these ISPs), when the user is out of his or her or its wireline focus, the invention also applies to mobile networks where an end user could be the customer of multiple mobile operators (an 'always connectable' paradigm instead of an 'always on' paradigm).

The invention is particularly valuable while discovering resources attached to a given ISP (or mobile operator), without implying any connection on the part of the end user. This means the invention allows ISPs to offer a new service consisting in managing end-user resources, by taking advantage of their business and technical position in an access network or edge network.

The invention is not limited to the embodiments of method, backhaul nodes and computer program product described above, only as examples, but it encompasses all alternative embodiments which may be considered by one skilled in the art within the scope of the claims hereafter.

## Claims

1. A method for presenting resources, accessible via a network comprising nodes, to end-user communication equipment so that end users are able to select relevant resources and related resource providers thereof according to their needs or expectations, comprising:
ix) collecting descriptions of resources currently offered to end users, said descriptions including attributes relating to network requirements for interaction with said resources, and entering said descriptions into a resources database located at at least one node of said network, including the step of aggregating said descriptions where possible,
x) collecting at a local level descriptions on a per-user basis of requests made by end users for interaction with resources, and aggregating said request descriptions and entering same into a user database located at at least one node of said network, said request descriptions including attributes usable for predicting acceptance probabilities for resources, said descriptions including attributes relating to network requirements
xi) collecting traffic engineering parameters relating to a relevant segment of said network and constituting potential network constraints and building therefrom at least one network database covering said segment of the network;
xii) transmitting said resources database through said network in a direction towards end users and optionally said user database through the network in a direction towards resources;
xiii) at a node of said network where a network database and a resources database are present but not a user database, applying a said network database as a filtering function to a said resources database resulting in a reduced resources database for transmission to a next network node, said network attributes associated to resources being updated with regard to the network filtering step
xiv) at a node of said network where a network database and a user database are present but not a resources database, optionally applying said network database as a filtering function to a said user database resulting in a reduced user database for transmission to a next network node, said network attributes associated to user requests being updated with regard to the network filtering step
xv) at a node of said network where simultaneously a network database, a user database and a resources database are present, applying said network database as a filtering function to a said resources database and/or to said user database and then, at said node, correlating entries in said resources database with entries in said user database in order to generate a user-request-specific database carrying descriptions of resources having a probability of request and/or acceptance by end users exceeding a certain threshold and the delivery of which is compatible with network constraints,
xvi) caching and storing said user-request-specific database in the form of one or more auxiliary database(s) accessible to at least one node that is close to end-user communication equipment.

2. The method according to claim 1, wherein when an Internet Service Provider (ISP) only controls the edge of said network at the resource and user edges but is nevertheless able to build an end-to-end network database based on end-to-end measurements, said network filtering and/or said matching and correlating is carried out at each node (2₁) defining an edge router of said network (1) to which a resource, or source (5ₙ) of a resource is connected and/or at each node (2ₖ) defining an edge router of said network (1) to which an item of end-user communication equipment (3ⱼ) is connected, whereby elements of a resources database and/or user database are updated and reduced taking into account network requirements for a given network segment, which in this case is preferably end-to-end.

3. The method according to claim 2, wherein said network filtering is applied to a resources database and/or user database at output edge router, closest to end users, level, at input edge router, closest to resources, level, directly or retroactively, or at both points.

4. The method according to claim 1, wherein when an Internet Service Provider (ISP) has full control of a network segment, the method includes collecting at nodes of said network local network states or traffic engineering parameters which are stored locally, and building therefrom a local network database specific to that node and arranging for network databases to be fully distributed at each node of said network, and network filtering then being performed at each intermediate node between resources and users along the resources-to-end users network path and both user and resources databases are cached locally before being transmitted to the next node.

5. The method according to one of claims 1 to 4, wherein said one or more auxiliary database(s) is/are updated from time to time by repeating steps of the method either on a regular basis, or when there is a new event resulting from a new resource, or a new user request/ expectation arising, or when a number of changes in said resources and/or user databases exceed a certain threshold.

6. The method according to one of claims 1 to 5, in which a result of applying a said network database as a filtering function to a said user database resulting in a reduced user database includes lowering user acceptance probability in view of network constraints.

7. The method according to one of claims 1 to 6, in which said traffic engineering parameters constituting potential network constraints in a relevant segment of said network include at least one of: quality of service (QoS), bandwidth, network element transit delay and adjacent link transmission delay, and for a given destination available bandwidth, latency and monetary cost.

8. The method according to claim 6 or 7, in which said network constraints are expressed in a deterministic manner.

9. The method according to claim 6 or 7, in which said network constraints are expressed in a probabilistic manner, wherein, as a result of network filtering, a probability that network requirements will be met is attached to elements in said resources and user databases, after which a probability threshold is applied to each element and when probability of meeting network requirements is below this threshold value, the element is removed from the respective database.

10. The method according to one of claims 1 to 9, in which network filtering of a resources database includes removing those resources which are not able to be correctly used in view of a network state.

11. The method according to one of claims 1 to 10, in which a at least one said user database is built and aggregated at edge router or BNG (Border Network Gateway) level serving end users.

12. The method according to one of claims 1 to 11, in which said attributes in a user database usable for predicting acceptance probabilities for resources attributes represent at least one of:
- acceptable monetary cost of providing said resources,
- network requirements for acceptance of said resources and server requirements to ensure compatibility with an end user's possibilities,
wherein the above probabilities of resources being requested and being accepted by end users take account of at least one of: statistical information related to number of requests from end users, possibilities of users to use said resources, user preferences, user profile, user spatial location and user availability in terms of time, and acceptable monetary cost for a given resource.

13. The method according to one of claims 1 to 12, wherein said attributes of said resource descriptions comprise at least one of:
- network requirements enabling said remote resources to be offered to end-users, and
- requirements client end-user communication equipment must meet to enable them to interact with said resources.

14. The method according to one of claims 1 to 13, wherein each determined resource acceptance probability and each network filtered and/or correlated and matched description is transmitted within the network by means either of advertisement messages or of application messages.

15. The method according to claim 14, wherein said messages are transmitted either in a node-by-node mode or in an end-to-end mode.

16. The method according to one of claims 1 to 15, in which, where resources are owned by end users themselves and said end users are mobile, the method includes the step of making implicit entries in a said user database with an acceptance probability close to 1, allowing end users to have access to their own resources if network filtering on the path to the user's location renders this feasible.

17. The method according to claim 16, wherein a resources database aggregating descriptions of home network or individual resources, services or capabilities owned by end-users themselves is collected and aggregated at an edge router of said network before it is advertised to other communities or private groups through the internet.

18. A computer program product comprising a set of instructions arranged, when it is executed by processing means, for performing the method according to one of claims 1 to 17 in order to present resources, services or capabilities, accessible via a network (1) comprising nodes (2ₖ), to users of end-user communication equipment (3ⱼ).
